# EUROPÄISCHE PATENTSCHRIFT

(11) **EP 4 216 125 B1**
(45) Veröffentlichungstag und Bekanntmachung des Hinweises auf die Patenterteilung: **18.12.2024**
(21) Anmeldenummer: 23000009.3
(22) Anmeldetag: 19.01.2023
(51) Int. Cl.: G06Q 10/0832, G06Q 10/0833, G06Q 10/08

(54) **VERFAHREN UND SYSTEM ZUR KOMMUNIKATION ZWISCHEN EINER ZIELPERSON UND EINER PAKETEMPFANGSPERSON**
METHOD AND SYSTEM FOR COMMUNICATION BETWEEN A TARGET PERSON AND A PACKET RECEPTION PERSON
PROCÉDÉ ET SYSTÈME DE COMMUNICATION ENTRE UN SUJET CIBLE ET UN SUJET RECEVANT DES PAQUETS

(30) Priorität: 20.01.2022 DE 102022101278
(43) Veröffentlichungstag der Anmeldung: 26.07.2023
(73) Patentinhaber: Weisse, Philip, 42555 Velbert (DE)
(72) Erfinder: Weisse, Philip, 42555 Velbert (DE)
(74) Vertreter: Weisse, Moltmann & Willems PartGmbB

(56) Entgegenhaltungen:
- EP-B1- 3 149 670
- US-A1- 2003 004 769
- US-A1- 2012 089 533
- US-A1- 2015 347 959
- US-A1- 2020 226 706
- US-A1- 2020 311 675

## Beschreibung

Die Erfindung betrifft ein Verfahren zur Kommunikation zwischen einer Zielperson und einer Paketempfangsperson. Dabei ist ein Paket an die Zielperson adressiert und wird von der Paketempfangsperson zur Verwahrung von einem Lieferanten angenommen. Das Paket weist ein Identifikationsmittel auf. In einem ersten Schritt wird das Identifikationsmittel über eine Erfassungseinrichtung einer der Paketempfangsperson zugeordneten ersten mobilen Vorrichtung erfasst. In diesem Zusammenhang weist das Identifikationsmittel eine Kommunikationsinformation auf. Anschließend wird ein Kommunikationsdatensatz durch die erste mobile Vorrichtung erzeugt und anhand der Kommunikationsinformation an eine Servereinrichtung übermittelt. Die Servereinrichtung speichert den

Kommunikationsdatensatz. in einem nächsten Schritt wird die Servereinrichtung durch eine zweite der Zielperson zugeordneten mobilen Vorrichtung abgefragt und der Kommunikationsdatensatz wird an die zweite mobile Vorrichtung übermittelt.

Darüber hinaus betrifft die Erfindung ein System zur Kommunikation zwischen einer Zielperson und einer Paketempfangsperson.

### Hintergrund und Stand der Technik

Infolge der Globalisierung und insbesondere durch den Internethandel hat sich das Volumen an verschickten Paketen im Laufe der letzten Jahrzehnte vervielfacht. Mit dem erhöhten Paketaufkommen muss eine geeignete Infrastruktur bereitgestellt werden, die gewährleistet, dass jedes Paket die adressierte Zielperson erreicht.

In der Praxis kommt es zurzeit häufig vor, dass Pakete an Nachbarn zugestellt werden, weil die adressierte Zielperson nicht im Haus ist. In großen Mehrfamilienhäusern, in denen eine große Anzahl untereinander nicht bekannter Wohnparteien leben, ist es anschließend häufig für eine Zielperson mit höherem Aufwand verbunden, die Partei oder Person ausfindig zu machen, die das erwartete Paket angenommen und verwahrt hat Zwar bieten die herkömmlichen Zustelldienste (DHL, HERMES, UPS, Amazon Logistics etc.) über Apps oder ihre Onlinepräsenz ein "Live-Tracking" zur Paketverfolgung an, allerdings wird dabei nachteilig regelmäßig nur der Nachname der Person erfasst bzw. angezeigt, welche das Paket angenommen hat. In welcher Wohnung (Gebäude, Etage, Flur) diese Person zu finden ist, ist über das "Live-Tracking" nicht unmittelbar ermittelbar.

Es hat sich gezeigt, dass die zunehmende Vermietung von Wohnungen über Plattformen wie "Airbnb" oder die Vermietung von Wohnungen über herkömmliche Untermietverträge sowie das Leben in Wohngemeinschaften (das besonders bei jungen Menschen in Großstädten beliebt ist) es noch schwieriger machen, Pakete bzw. die Personen zu finden. Denn die hohe Fluktuation der in einem Mehrfamilienhaus wohnenden Personen hat zur Folge, dass Klingelschilder häufig nicht aktualisiert werden. Das macht es - in Fällen, in denen eine Person das Paket angenommen hat, welches nicht auf einem Klingelschild aufgeführt wirdfast unmöglich, den Empfänger des Pakets ausfindig zu machen, ohne an jeder Wohnung zu klingeln und nach dem Paket zu fragen.

Hinzu kommt, dass in Mehrfamilienhäusern die Lieferanten es vorziehen, die Pakete gemeinsam in die unteren Etagen zu liefern, da sie unter Zeitdruck stehen und so den Gang in die oberen Etagen vermeiden können. Personen bzw. Parteien, die nachbarschaftsdienlich diese Pakete entgegennehmen, müssen anschließend allerdings damit rechnen, dass die jeweiligen Personen, an denen die Pakete adressiert sind, sich die Pakete einzeln in zeitlichen Abständen abholen. Dies kann als sehr störend empfunden werden, wenn die Pakete von allen Personen im Haus über einen Zeitraum verteilt nach und nach abgeholt werden.

US 2015/347959 A1 offenbart im Allgemeinen ein System und ein Verfahren zur Verfolgung von Gegenständen, wie zum Beispiel ein Paket. In diesem Zusammenhang bezieht sich die Druckschrift insbesondere auf ein Verfahren zur Knotenkommunikation in einem hierarchischen drahtlosen Knotennetzwerk mit zahlreichen ID-Knoten auf einer ersten Ebene, Masterknoten auf einer zweiten Ebene und einem Server auf einer dritten Ebene. Ein ID-Knoten sowie ein Masterknoten entsprechen dabei jeweils einer Vorrichtung, welche neben Komponenten für die Kommunikation auch einen Prozessor, Speicher oder Sensoren umfassen kann. Im Unterschied zu einem ID-Knoten verfügt ein Masterknoten nicht ausschließlich Mittel zur kurzwelligen Kommunikation, sondern auch Mittel zur langwelligen Kommunikation. Der Masterknoten fungiert insofern als Kommunikationsbrücke zwischen dem ID-Knoten und dem Server, da er mittels kurzwelliger Kommunikation mit dem ID-Knoten und mittels langwelliger Kommunikation mit dem Server über ein Netzwerk kommunizieren kann.

in einer Ausführungsform der vorgenannten US-Anmeldung wird offenbart, dass ein ID-Knoten an einem Paket angebracht ist. Über ein Smartphone kann eine Trackingnummer generiert werden, die mit dem ID-Knoten verknüpft und über ein Netzwerk auf dem Server gespeichert werden kann. Anschließend wird das Paket über verschiedene Entitäten, denen jeweils ein Masterknoten zugeordnet ist, zur Zieladresse geliefert. Während der Lieferung können die jeweiligen Entitäten Sensordaten des ID-Knotens auslesen und/oder Informationen über den ID-Knoten bzw. über das Paket vom Server abrufen sowie an den Server zurücksenden. Wenn ein Paket an die Zieladresse ausgeliefert wurde, kann der Server über einen Masterknoten von dem Lieferanten über den Auslieferungsstatus benachrichtigt werden. Ein Endgerät von einer adressierten Zielperson kann ferner als weiterer Masterknoten fungieren und Informationen, die mit dem ID-Knoten verknüpft sind, vom Server abrufen.

US 2003/004769 A1 bezieht sich auf ein Frachtinformationssystem, das elektronische Tags verwendet, um Informationen über die Fracht zu verwalten. Die elektronischen Tags sind dabei an der Fracht angebracht, wobei sämtliche für die Auslieferung der Fracht notwenigen Informationen auf den elektronischen Tags gespeichert sein können. Die auf den Tags gespeicherten Informationen können während der Auslieferung von verschiedenen Entitäten ausgelesen und bearbeitet werden.

EP 3 149 670 B1 bezieht sich auf ein Verfahren und ein System zur Lieferung von Gegenständen und zur Überwachung von Zustellungen. Über ein Näherungsdetektionssystem wird die Nähe des Zustellfahrzeugs oder der Zustellperson zur Zustelladresse erkannt. Wenn sich das Zustellfahrzeug und/oder die Zustellperson der Zustelladresse nähert, wird eine Kommunikation zwischen einer dem Zustellfahrzeug und/oder der Zustellperson zugeordneten Kommunikationseinrichtung und einer der Zustelladresse zugeordneten Kommunikationseinrichtung ermöglicht. Sofern an der Zustelladresse niemand anzutreffen ist, wird über die Kommunikation der Kommunikationseinrichtungen eine Alternativadresse bereitgestellt.

### Aufgabe der Erfindung

Die Aufgabe der Erfindung war es daher die Nachteile aus dem Stand der Technik zu beseitigen und ein Verfahren sowie ein System bereitzustellen, welches einer adressierten Zielperson das Auffinden von einem an eine Empfangsperson abgegebenen Paket erleichtert und darüber hinaus ermöglicht, einen Ort und/oder Zeitpunkt für die Übergabe des Pakets zu definieren.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein Verfahren zur Kommunikation zwischen einer Zielperson und einer Paketempfangsperson, wobei ein Paket an die Zielperson adressiert und von der Paketempfangsperson zur Verwahrung von einem Lieferanten angenommen wird bzw. angenommen wurde, wobei das Paket ein Identifikationsmittel umfasst;
umfassend die nachfolgenden Schritte:
a. Erfassen des Identifikationsmittels über eine Erfassungseinrichtung einer der Paketempfangsperson zugeordneten ersten mobilen Vorrichtung, wobei das Identifikationsmittel eine Kommunikationsinformation umfasst;
b. Erzeugen eines Kommunikationsdatensatzes durch die erste mobile Vorrichtung;
c. Übermittelung des Kommunikationsdatensatzes anhand der Kommunikationsinformation an eine Servereinrichtung;
d. Speichern des Kommunikationsdatensatzes durch die Servereinrichtung;
e. Abfragen der Servereinrichtung über eine zweite der Zielperson zugeordnete mobile Vorrichtung;
f. Übermittlung des Kommunikationsdatensatzes an die zweite mobile Vorrichtung.

Die Kombination der vorgeschlagenen Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinanderstehen. Ein wichtiger Vorteil des erfindungsgemäßen Verfahrens ist die Erforderlichkeit von äußerst wenigen Verfahrensschritten und Systemkomponenten, wobei trotzdem eine überaus robuste und fehlerresistente Infrastruktur zur Kommunikation zwischen einer Zielperson und einer Paketempfangsperson generiert wird. Insbesondere wenn die Zielperson nicht erreichbar ist und ein Paket zugestellt wird, ist es üblich, dass das Paket an eine Paketempfangsperson, z.B. einen Nachbarn, übergeben wird. Das vorgeschlagene Verfahren führt vor allem dazu, dass das Lokalisieren von Paketen oder der Paketempfangsperson durch die Zielperson wesentlich erleichtert wird und darüber hinaus einem Empfänger von fremden Paketen, also der Paketempfangsperson, die Möglichkeit geboten wird, die Abholung der gelagerten Pakete durch die Zielpersonen nach seinen Wünschen zu organisieren.

Ferner ermöglicht das Verfahren auch eine möglichst anonyme Kommunikation zwischen einer Paketempfangsperson und einer Zielperson, denn die Kommunikation findet über eine Servereinrichtung statt. Die Herausgabe einer Telefonnummer ist dabei beispielsweise nicht notwendig. Zudem kann die Abholung eines Paketes an einem fremden Ort bevorzugt vereinbart werden, wenn die Paketempfangsperson vermeiden möchte, dass die Zielperson an der eigenen Wohnung das Paket abholt. Ein wesentlicher Vorteil ist weiterhin, dass die Nachricht der Empfangsperson, also der Kommunikationsdatensatz, der Zielperson unabhängig von ihrem Aufenthaltsort bereitgestellt werden kann. So kann die Zielperson beispielsweise den Kommunikationsdatensatz der Paketempfangsperson aus dem Büro abrufen und in diesem Zusammenhang unter anderem von dort aus oder auf dem Weg nach Hause mit der Paketempfangsperson kommunizieren.

Eine Zielperson ist im Sinne der Erfindung bevorzugt eine Person, an welche das Paket adressiert ist Dies kann beispielsweise sein, weil die Person Bestellungen im Internet aufgegeben hat oder weil Bekannte dieser Person ihr einen Gegenstand zuschicken. Dabei umfasst das Paket bevorzugt alle notwendigen Adressinformationen (unter anderem: Straßenname, Hausnummer, Nachname), welche insbesondere auf dem Paket aufgedruckt sind. Unter Berücksichtigung dieser Adressinformationen kann ein Lieferant oder ein Paketbote den Wohnort der Zielperson lokalisieren. Darüber hinaus kann die Zielperson im Sinne der Erfindung ein Synonym für mehrere Personen sein, wenn z.B. eine Familie oder ein Haushalt - alle mit demselben Nachnamen - adressiert wird.

In einer weiteren bevorzugten Ausführungsform ist die Adresse (verschlüsselt) in dem Identifikationsmittel umfasst. Bei dem Identifikationsmittel kann es sich in diesem Fall zum Beispiel um einen Barcode oder einem RFID-Tag handeln, wobei das Identifikationsmittel über ein zugehöriges Auslesemedium bzw. über eine Erfassungseinrichtung auslesbar ist. Es versteht sich, dass es sich bei einem Auslesemedium auch um eine mobile Vorrichtung eines Lieferanten handeln kann. Sofern die Adresse der Zielperson in dem Identifikationsmittel umfasst ist, kann möglicherweise darauf verzichtet werden, die Adresse der Zielperson mit für den Menschen erfassbaren Druckbuchstaben auf dem Paket aufzubringen. Dies erhöht insbesondere die Sicherheit der Adressdaten gegenüber Dritten.

Eine Paketempfangsperson ist hingegen bevorzugt eine Person (oder eine Personengruppe), die das Paket empfängt bzw. empfangen hat. Zu der Zeit, in der die Zielperson nicht anwesend ist, befindet sich diese Person vorzugsweise in ihrer Wohnung und erhält ein oder mehrere Pakete von einem Lieferanten, Zusteller oder Paketboten. Vorzugsweise wohnt die Person, die das Paket erhält, in der Nachbarschaft oder im selben Gebäude wie die Zielperson. Die Paketempfangsperson kann auch Pakete von mehreren Zielpersonen erhalten. Die Paketempfangsperson lagert oder verstaut die empfangenen Pakete vorzugsweise , in ihrer Wohnung, bis sie die Pakete an die entsprechenden Zielpersonen übergeben kann.

Ein Paket ist vorzugsweise ein dreidimensionaler Gegenstand. Üblicherweise weist ein Paket bevorzugt eine Hülle, bspw. einen Karton auf, in welchem ein oder mehrere Objekte umfasst sind. Anders ausgedrückt ist ein Paket bevorzugt auch ein mit Papier oder Ähnlichem umhüllter (und möglicherweise verschnürter) Packen oder etwas in einen Karton oder Ähnlichem Eingepacktes. Bevorzugt ist ein Paket auch als eine größere Gesamtheit von Dingen, Teilen, Gegenständen usw. in verbindlicher Zusammenstellung anzusehen. Weiterhin bevorzugt ist ein Paket auch als eine größere Packung, die eine bestimmte größere Menge einer Ware fertig abgepackt enthält, zu betrachten. Ein Paket ist zudem eine fest verpackte, meist größere Postsendung. Pakete haben dabei häufig eine Größe, die nicht dazu geeignet ist, dass sie in einen herkömmlichen Briefkasten eingeworfen werden können. Außerdem enthalten Pakete oft Wertsachen, weshalb sie von einer Person entgegengenommen werden müssen, die entweder die Zielperson ist oder eine andere Person, die ihre persönlichen Daten, vorzugsweise Name und Adresse, beim Lieferanten hinterlässt.

Bevorzugt ist ein Lieferant eine Person oder Änstalt, die zur Ausführung einer Versendung, insbesondere eines Pakets, beauftragt ist. Beispielsweise ist der Lieferant auch als ein Spediteur, ein Frachtführer, ein Paketbote, ein Zusteller oder Postbote anzusehen (ohne darauf beschränkt zu sein). Der Lieferant kann ein oder eine Vielzahl von Paketen transportieren und versucht diese möglichst effizient an die entsprechenden Zielpersonen auszuliefern.

Das Identifikationsmittel ist ferner vorzugsweise als ein Speichermedium zu verstehen, welches bevorzugt auslesbare Informationen speichert. Dieses Speichermedium kann ein Datenträger mit elektronischen Daten (bspw. RFID-Tag) oder aber bspw. als ein auf einem Papier (Pakethülle) oder Etikett aufgedrucktes Muster (zum Beispiel: Barcode) ausgestaltet sein. Vorzugsweise sind die auslesbaren Daten auf dem Speichermedium derart ausgestaltet, dass sie verschlüsselt und nur mit geeigneten Auslesemedien bzw. Erfassungsgeräten auslesbar sind. Die auf dem Speichermedium umfassten Informationen weisen vorzugsweise mindestens eine Kommunikationsinformation auf. Eine Kommunikationsinformation ist weiterhin bevorzugt der Gestalt, dass sie unter anderem eine Information über einen Verbindungsaufbau zu einer Servereinrichtung umfasst.

Die Erfassungseinrichtung ist bevorzugt abhängig von der Art des Identifikationsmittels ausgestaltet. Die Erfassungseinrichtung weist bevorzugt einen oder mehrere Sensoren auf, die dazu eingerichtet sind, die auf dem Identifikationsmittel umfassten Daten zu erfassen und/oder auszulesen. Besonders bevorzugt ist die Erfassungseinrichtung in einer mobilen Vorrichtung, insbesondere in der ersten, zweiten oder dritten mobilen Vorrichtung, umfasst.

Die Erfassungseinrichtung kann beispielsweise als eine Kamera, RFID-Sensor, NFC-Sensor oder Infrarotsensor ausgestaltet sein (ohne darauf beschränkt zu sein).

Das Identifikationsmittel wird bevorzugt mit einer Erfassungseinrichtung erfasst und/oder analysiert, wobei besonders bevorzugt die Erfassungseinrichtung eine Datenverarbeitungseinheit umfasst und/oder mit einer solchen in Datenverbindung steht, welche die aufgenommenen bzw. erfassten Merkmale analysiert. Die Analyse kann dabei auf verschiedenen Wegen erfolgen. So können bspw. über eine Erfassungseinrichtung aufgenommene Fotos über Computer Vision Algorithmen analysiert werden. Die Analyse ermöglicht insbesondere auch die Kommunikationsinformation aus dem Identifikationsmittel zu extrahieren.

Im Sinne der Erfindung ist eine mobile Vorrichtung vorzugsweise ein nicht-stationäres transportables Endgerät. Ein solches Endgerät kann z.B. ein Smartphone, ein Laptop und/oder ein Tablet-Computer sein. Vorteilhafterweise lassen sich herkömmliche Geräte für das erfindungsgemäße Verfahren verwenden. Dadurch wird sichergestellt, dass eine große Anzahl von Personen an dem vorgeschlagenen Verfahren partizipieren kann, ohne dass neue Geräte angeschafft werden müssen. Die mobile Vorrichtung, als nicht stationäres Endgerät, ermöglicht zudem die Erfassung des Identifikationsmittels unmittelbar nach Erhalt des Pakets, beispielsweise an der Haustür, während der Lieferant noch anwesend ist.

Nachdem das Identifikationsmittel erfasst und insbesondere die darin enthaltenen Informationen, wie z. B. die Kommunikationsinformationen, entschlüsselt oder extrahiert wurden, wird bevorzugt von der ersten mobilen Vorrichtung ein Kommunikationsdatensatz erstellt. Der Kommunikationsdatensatz kann vorzugsweise eine individuelle Nachricht umfassen, die von der Paketempfangsperson manuell in die erste mobile Vorrichtung eingegeben wird. Diese Nachricht kann z. B. eine Mitteilung und/oder Informationen an die Zielperson enthalten. Anhand der Kommunikationsinformationen, zu denen z. B. eine IP-Adresse gehört, kann der Kommunikationsdatensatz über eine Internetverbindung an die Servereinrichtung übermittelt werden. Der Kommunikationsdatensatz kann auch den Namen der Paketempfangsperson, die Adresse des Abholortes, die Abholzeit oder Ähnliches als individuelle Nachricht umfassen. Mit dem Kommunikationsdatensatz kann die Paketempfangsperson eine Nachricht an die Servereinrichtung übermitteln, die von der Zielperson gelesen werden kann. Zum Beispiel kann ein Termin und/oder ein Ort für die Abholung vorgeschlagen werden. Der Vorteil ist, dass die Paketempfangsperson bestimmt, welche Informationen die Zielperson erhalten soll. Dies führt dazu, dass die Übergabe des Pakets so anonym wie möglich erfolgen kann.

In einer weiteren bevorzugten Ausführungsform können neben textbasierten Nachrichten Fotos, Videos oder Audiodaten in dem Kommunikationsdatensatz umfasst sein.

In einer weiteren bevorzugten Ausführungsform wird durch das Erfassen des Identifikationsmittels eine Oberfläche einer Webseite oder einer Applikation auf der ersten mobilen Vorrichtung der Paketempfangsperson geöffnet. In einem auf der Webseite oder der Applikation angefertigten Formular können wesentliche Daten eingegeben werden: wie Name, Treffpunkt und Uhrzeit zur Übergabe des Pakets. Das Formular ermöglicht einem Nutzer besonders schnell die wichtigsten Informationen auszufüllen. Es kann weiterhin bevorzugt möglich sein, dass die mobile Vorrichtung über entsprechende Algorithmen umfasst, die das Formular auch automatisiert teilweise oder vollständig ausfüllen.

Weiterhin ist eine mobile Vorrichtung bevorzugt dazu eingerichtet, einen Kommunikationsdatensatz zu erzeugen, wobei der Kommunikationsdatensatz in einem Dateiformat gespeichert wird, ausgesucht aus der Gruppe umfassend PDF, JSON, XML, CSV. PDF-Dateien zeichnen sich durch sehr universelle Verwendbarkeit auf unterschiedlichen Datenverarbeitungssystemen aus, während einer der großen Vorteile von JSON-Dateien die Einfachheit der Implementierung und der Anwendung ist. Aufgrund des einfachen Aufbaus benötigen JSON-Dateien bei der Anwendung nicht viele Ressourcen. So können umfangreiche Daten in einer annehmbaren Zeit ausgewertet werden. Das XML-Format kann vorteilhaft ohne große Aufwendungen an andere Systeme angebunden werden, sodass eine besonders gute Kompatibilität besteht. Für die langfristige Dateiablage ist XML ebenso vorteilhaft geeignet und XML kann zudem einfach in andere Dateiformate gewandelt werden. Das CSV - Dateiformat ist vorteilhaft vielseitig nutzbar. Der große Vorteil des CSV-Formats liegt weiterhin in der leichten Übertragbarkeit, wie zum Beispiel den Import in unterschiedliche Datenbanken oder Programmen. In bereits bestehenden Datenbanken können Inhalte aus CSV-Dateien vielfach eingelesen werden. Es ist insbesondere dann vorteilhaft, wenn unterschiedliche Datenquellen (zum Beispiel Daten aus verschiedenen Erfassungseinrichtungen) zu einem einzigen Datenbestand zusammengefasst werden sollen.

Die zu verwendenden Dateiformate sind nicht unerheblich für das vorgeschlagene Verfahren und System, denn diese haben einen Einfluss auf die Berechnungsgeschwindigkeit, den Speicher sowie die Übertragungsgeschwindigkeit.

In einer weiteren bevorzugten Ausführungsform ist das Verfahren dadurch gekennzeichnet, dass die Übermittlung des Kommunikationsdatensatzes als ein Datenübertragungsprozess über eine IP-basierte Kommunikation erfolgt, wobei bevorzugt mindestens ein Datenübertragungsprozess durch ein Sicherheitsmodul kryptographisch abgesichert durchgeführt wird. Dies führt besonders vorteilhaft zu einer manipulationssicheren Übertragung der Informationsvorgänge.

Die IP-basierte Kommunikation erfolgt bevorzugt durch Internetprotokolle (IPv4, IPv6), also Protokolle der Netzwerkkommunikation. Die Übertragung von Daten über Protokolle der Netzwerkkommunikation ermöglicht vorteilhaft eine Übertragung von großen Datenmengen (TCP, UDP), sodass unter Umständen dadurch sogar auch die Liveübertragung von Video und detaillierte Fotofolgen ermöglicht werden. Vorliegend sind die Protokolle ausgesucht aus der Gruppe umfassend, https, http, SIP, SFTP, FTP, SMTP.

In einer bevorzugten Ausführungsform wird das http (Hypertext Transfer Protocol) bzw. https (Hypertext Transfer Protocol Secure) - Protokoll als Übertragungsprotokoll verwendet. In diesem Zusammenhang wird der Kommunikationsdatensatz als sogenannter Payload (Nutzlast) mittels "http"/"https" übermittelt. Ein Vorteil von http/https ist, dass die Entitäten (Servereinrichtungl mobile Vorrichtung) nicht damit belastet werden, eine Verbindung über eine längere Zeit halten zu müssen. Weiterhin ist "http" in simpler Weise ohne große Anforderungen in das erfindungsgemäße System zu implementieren und insbesondere überaus benutzerfreundlich

Dadurch, dass die Servereinrichtung bevorzugt den Kommunikationsdatensatz in einer Datenbank speichert, wird vorteilhaft eine Historie zur Kommunikation erzeugt. Es versteht sich, dass auf diese abgespeicherte Historie bzw. historischen Daten jederzeit - auch nachträglich - zugegriffen und diese Daten daher auch geprüft werden können. Die Historie kann bevorzugt gemäß Datenschutzrichtlinien nach einer bestimmten Zeit, bspw. zwei Wochen, automatisiert gelöscht werden.

In einer weiteren bevorzugten Ausführungsform der Erfindung ist die Servereinrichtung ein dezentraler Server oder mehrere miteinander verbundene dezentrale Server. Diese liegen bevorzugt örtlich entfernt von den mobilen Vorrichtungen vor. Örtlich entfernt bedeutet im Hinblick auf die vorliegende Erfindung, dass der Server bevorzugt an einem Ort positioniert ist, der nicht in einem gleichen Gebäude liegt, wie die mobilen Vorrichtungen. Ein dezentraler Server ist auch als ein externer Server zu verstehen. Der Vorteil einer solchen Anordnung ist unter anderem darin zu sehen, dass das System dezentral ausgestaltet ist, sodass bei einem Ausfall einzelner Komponenten die einzelnen Komponenten für sich genommen ausgetauscht bzw. ersetzt oder repariert werden können, ohne dabei das gesamte System ersetzen zu müssen.

Weiterhin bevorzugt kann die Servereinrichtung auch eine Firewall oder ein anderes Sicherheitssystem enthalten, um die Daten vor unbefugtem Zugriff zu schützen.

In einer weiteren bevorzugten Ausführungsform kann die Servereinrichtung auch ein Chatbot-System enthalten, das automatisiert auf Anfragen der Zielperson und der Paketempfangsperson reagiert.

In einer weiteren bevorzugten Ausführungsform ist das Verfahren dadurch gekennzeichnet, dass die Servereinrichtung eine Benachrichtigung für die erste mobile Vorrichtung erzeugt, wenn die zweite mobile Vorrichtung den Kommunikationsdatensatz abfragt. Die Benachrichtigung erfolgt bevorzugt durch einen Datensatz, insbesondere einen Benachrichtigungsdatensatz. Durch die Erzeugung einer Benachrichtigung kann die Paketempfangsperson sofort über den Erhalt der Kommunikationsdaten informiert werden. Dadurch kann sie schnell und effizient auf die Kommunikation reagieren und sicherstellen, dass die Kommunikation zuverlässig verläuft.

Die von der Servereinrichtung umfassten Funktionen und/oder Bestandteile können von einem Server, mehreren Servern, einem Server-Cluster und/oder mehreren Server-Clustern realisiert werden, und einzeln, redundant oder multiredundant ausgelegt sein, wobei die einzelnen Funktionen von jeweils einem oder mehreren Servern und/oder von einzelnen oder mehreren Anwendungen realisiert werden können. Die einzelnen Funktionen können auch zur Lastverteilung oder zur logischen Trennung von mehreren Instanzen realisiert werden.

Ferner wird die Servereinrichtung bevorzugt über eine der Zielperson zugeordnete zweite mobile Vorrichtung abgefragt. Die Abfrage gestaltet sich derart, dass überprüft wird, ob ein an die zweite mobile Vorrichtung adressierter Kommunikationsdatensatz auf der Servereinrichtung gespeichert bzw. in der Datenbank abgelegt wurde.

Wie schon geschildert, ermittelt die erste mobile Vorrichtung die Kommunikationsinformation bevorzugt über das Erfassen des Identifikationsmittels auf dem empfangenen Paket. Die zweite mobile Vorrichtung erhält bevorzugt - auf einem anderen Übertragungswege, nämlich bevorzugt über E-Mail ebenfalls die Kommunikationsinformation, um mit der Servereinrichtung kommunizieren zu können.

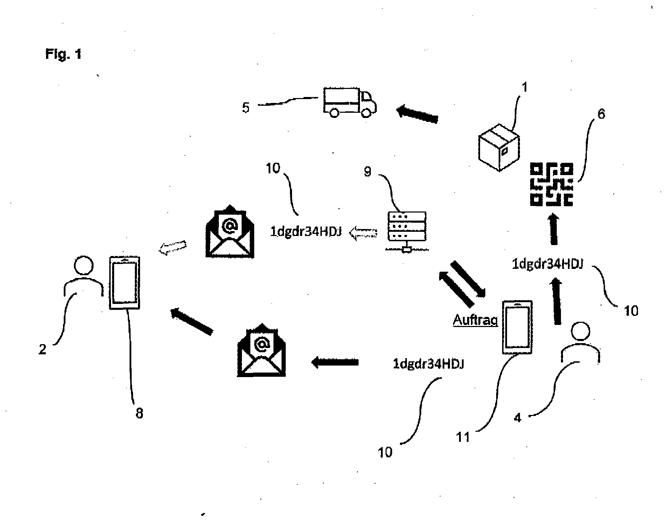

Die Kommunikationsinformation wird bevorzugt bei der Versendung des Pakets erstellt und vorzugsweise einerseits im Identifikationsmittel implementiert und andererseits über IP-basierte Kommunikation an die zweite mobile Vorrichtung, also die mobile Vorrichtung der Zielperson, übermittelt (vgl. auch Fig.1). Die Kommunikationsinformation kann neben Verbindungsinformationen zu der Servereinrichtung ebenfalls eine Identifikationsnummer umfassen. Die Identifikationsnummer kann bevorzugt für die Abfrage der Servereinrichtung verwendet werden.

So wird der von der ersten mobilen Vorrichtung an die Servereinrichtung übermittelte Kommunikationsdatensatz der Identifikationsnummer zugeordnet und in Verbindung mit dieser gespeichert. In diesem Zusammenhang erfasst die erste mobile Vorrichtung zunächst das Identifikationsmittel und extrahiert die Kommunikationsinformation, sodass die erste mobile Vorrichtung die notwendigen Informationen zur Kommunikation mit der Servereinrichtung kennt sowie die dem Paket oder Versendungsvorgang zugeordnete Identifikationsnummer. Die Identifikationsnummer wird schließlich bevorzugt ebenfalls in den Kommunikationsdatensatz implementiert. Sofern die Servereinrichtung den Kommunikationsdatensatz erhält, kann diese die Identifikationsnummer innerhalb des Kommunikationsdatensatzes ermitteln und den Kommunikationsdatensatz somit bevorzugt in einer Datenbank dieser Identifikationsnummer bzw. einem Sendungsvorgang oder Auftrag zuordnen.

Bei der Abfrage der zweiten mobilen Vorrichtung, übermittelt die zweite mobile Vorrichtung bevorzugt der Servereinrichtung die ihr vorher über IP-basierter Kommunikation zugeschickte Identifikationsnummer. Die Servereinrichtung durchsucht bevorzugt anschließend die Datenbank, ob unter dieser Identifikationsnummer ein Kommunikationsdatensatz in der Datenbank gespeichert ist. Falls dem so ist, übermittelt sie bevorzugt den gespeicherten Kommunikationsdatensatz an die zweite mobile Vorrichtung.

In einer weiteren bevorzugten Ausführungsform ist das Verfahren dadurch gekennzeichnet, dass die zweite mobile Vorrichtung nach dem Erhalt des Kommunikationsdatensatzes einen Antwortdatensatz generiert und diesen an die Servereinrichtung übermittelt, wobei die Servereinrichtung den Antwortdatensatz speichert und durch die erste mobile Vorrichtung abgerufen werden kann oder die Servereinrichtung den Antwortdatensatz ohne eine Speicherung an die erste mobile Vorrichtung weiterleitet. Vorteilhafterweise kann dadurch eine Kommunikation zwischen der zweiten mobilen Vorrichtung und der ersten mobilen Vorrichtung erfolgen, wobei dies über die Servereinrichtung erfolgt. Dadurch wird kein Austausch von Daten, wie Handynummern, zwischen der Paketempfangsperson und der Zielperson notwendig.

Neben den bereits weiter oben formulierten Vorteilen ermöglicht das vorgeschlagene Verfahren auch, dass die Zielperson der Paketempfangsperson mitteilen kann, wie das erhaltene Paket im besten Fall zu lagern ist. Häufig ist von außen nicht einzusehen, welchen Inhalt das Paket aufweist. So können beispielsweise gekühlte Lebensmittel in einem Paket umfasst sein, die insbesondere in einem Kühlschrank gelagert werden müssen, damit sie nicht verderben. Eine Zielperson kann der Paketempfangsperson derartige Informationen ebenfalls mitteilen.

Der Antwortdatensatz ist vorzugsweise als eine Antwort auf den Kommunikationsdatensatz anzusehen. Der Antwortdatensatz ist daher bevorzugt analog zu einem Kommunikationsdatensatz zu betrachten und wird in der Art und Weise (Übertragungsverfahren), wie im Zuge des Kommunikationsdatensatzes beschrieben, an eine Servereinrichtung übermittelt. Erweist im Übrigen bevorzugt eines der oben genannten Datei-Formate auf.

Der Antwortdatensatz umfasst bevorzugt eine individuelle Nachricht der Zielperson sowie die Identifikationsnummer. Anhand der Identifikationsnummer kann die Servereinrichtung bevorzugt eine korrekte Zuordnung des Antwortdatensatzes in der Datenbank vornehmen, sodass der Antwortdatensatz nach einer Abfrage der ersten mobilen Vorrichtung, dieser übermittelt werden kann. Die individuelle Nachricht der Zielperson kann sich hingegen vorzugsweise auf die Vereinbarung eines Treffpunktes beziehen oder aber eine anderweitige inhaltliche information, als Antwort auf die Anfrage der Paketempfangsperson (im Kommunikationsdatensatz), betreffen.

In einer weiteren bevorzugten Ausführungsform ist das Verfahren dadurch gekennzeichnet, dass die Servereinrichtung den Kommunikationsdatensatz und/oder den Antwortdatensatz in einer Datenbank speichert und den Kommunikationsdatensatz undloder den Antwortdatensatz der ersten und/oder zweiten mobilen Vorrichtung zuordnet. Durch das Speichern des Kommunikationsdatensatzes und/oder des Antwortdatensatzes in einer Datenbank werden die in den Datensätzen umfassten Daten in strukturierter Form gespeichert. Die Struktur macht das Wiederauffinden und Bearbeiten von Daten möglich. Datenbanken dienen mit ihrem strukturierten Aufbau der Datenverwaltung, Datenspeicherung, Datenauswertung und gezielten Bearbeitung von Daten.

Das Zuordnen kann insbesondere dadurch erfolgen, dass im Kommunikationsdatensatz und/oder dem Antwortdatensatz eine Identifikationsnummer umfasst ist. Diese Identifikationsnummer kann durch die Servereinrichtung aus den Datensätzen extrahiert bzw. ermittelt werden. Der Kommunikationsdatensatz und/oder der Antwortdatensatz werden in der Datenbank entsprechend dieser Identifikationsnummer zugeordnet und/oder unter dieser Identifikationsnummer gespeichert. Die ,Identifikationsnummer wird bevorzugt für jeden Absendevorgang (oder Auftrag oder Sendungsvorgang) bzw. für jedes Paket individuell neu erstellt.

In einer weiteren bevorzugten Ausführungsform ist das Verfahren dadurch gekennzeichnet, dass die Abfrage der Servereinrichtung durch die zweite mobile Vorrichtung manuell, bevorzugt durch die Zielperson, ausgelöst wird. Vorzugsweise weist die mobile Vorrichtung ein installiertes Computerprogrammprodukt (Appl Applikation) auf, welches durch Bedienung der Zielperson eine Abfrage über IP-basierter Kommunikation auslöst. Es versteht sich, dass die erste mobile Vorrichtung analog durch die Paketempfangsperson ebenfalls eine Abfrage auslösen kann, um die Servereinrichtung nach einem Antwortdatensatz abzufragen.

Analog kann die Servereinrichtung auch durch die erste mobile Vorrichtung abgefragt werden, um den Antwortdatensatz zu erhalten.

In einer weiteren bevorzugten Ausführungsform ist das Verfahren dadurch gekennzeichnet, dass die Abfrage der Servereinrichtung durch die zweite mobile Vorrichtung automatisiert, bevorzugt in einem Zyklus von 1 min - 60 min, erfolgt. Auch die erste mobile Vorrichtung kann bevorzugt in gleicher Weise eine automatisierte Abfrage durchführen. Der Vorteil einer automatisierten Abfrage ist der, dass die Zielperson (oder Empfangsperson) nicht proaktiv werden muss. So kann beispielsweise die Abfrage im Hintergrund anderer auf der mobilen Vorrichtung ausgeführter Anwendungen erfolgen und sobald ein Kommunikationsdatensatz (oder ein Antwortdatensatz) für die Zielperson (oder Paketempfangsperson) hinterlegt sein sollte, wird der Zielperson (oder Paketempfangsperson) eine Meldung auf ihrer mobilen Vorrichtung bereitgestellt, welche verdeutlicht, dass eine Nachricht angekommen ist Nachdem diese Meldung von der Zielperson (oder Paketempfangsperson) geöffnet wurde, kann sie bevorzugt die im Kommunikationsdatensatz (oder Antwortdatensatz) enthaltenen Informationen lesen. Vorzugsweise wird die im Kommunikationsdatensatz (oder Antwortdatensatz) umfassten Informationswerte. aus der Datei extrahiert und auf der mobilen Vorrichtung strukturiert visualisiert, sodass die Zielperson (oder Empfangsperson) diese unmittelbar lesen kann.

In einer weiteren bevorzugten Ausführungsform ist das Verfahren dadurch gekennzeichnet, dass beim Absenden des Pakets durch einen Absender eine Identifikationsnummer generiert wird, indem ein Endgerät, bevorzugt eine dritte mobile Vorrichtung, eine bidirektionale Verbindung mit der Servereinrichtung aufnimmt und die Servereinrichtung einen Vorgang mit einer Identifikationsnummer erstellt, welche einerseits der zweiten mobilen Vorrichtung übermittelt wird und andererseits in der Kommunikationsinformation umfasst ist Im Sinne der Erfindung ist unter "Absenden des Pakets", bevorzugt der physische Vorgang der Übergabe des Pakets an einen Lieferanten zu verstehen. Der Lieferant nimmt bevorzugt das Paket an und veranlasst dann die Zustellung des Pakets an die Zieladresse. Mit " beim Absenden des Pakets "ist nicht der exakte Zeitpunkt der Abgabe des Pakets an den Lieferanten gemeint, sondern vielmehr ein Zeitpunkt (bis zu mehreren Tagen) vor der Abgabe des Pakets an den Lieferanten, an dem die Identifikationsnummer generiert wird.

Dabei verfügt die Servereinrichtung über Mittel, die es ihr ermöglichen, eine zufällige und/oder insbesondere manipulationssichere Identifikationsnummer zu erzeugen. Jede Identifikationsnummer ist insbesondere einem Auftrag, einem Absendevorgang und/oder einem Paket zugeordnet.

Sobald ein Absender sich entschließt ein Paket abzusenden, kann dieser über eine Applikation auf seiner mobilen Vorrichtung oder einer Webseite, eine IP-basierte Verbindung mit der Servereinrichtung aufbauen. Die dritte mobile Vorrichtung Initiiert somit einen neuen Auftrag, was dazu führt, dass die Servereinrichtung bevorzugt eine entsprechende Identifikationsnummer erstellt und diese der dritten mobilen Vorrichtung (Absender) und der zweiten mobilen Vorrichtung (Zielperson) zukommen lässt. Die Servereinrichtung umfasst diesbezüglich Algorithmen, die eine möglichst manipulationssichere Identifikationsnummer erzeugen können.

In einer weiteren bevorzugten Ausführungsform ist das Verfahren dadurch gekennzeichnet, dass der Lieferant, bevorzugt zyklisch, ortsbezogene Informationen an die Servereinrichtung übermittelt, welche von der zweiten mobilen Vorrichtung abgerufen werden können. Dies ermöglicht allen Teilnehmern am System, insbesondere der Zielperson, das Paket bzw. den Sendungsverlauf "Live" zu verfolgen. Durch die Online-Verfolgung kann die Zielperson die geplante Zielankunft des Pakets ermitteln bzw. abschätzen, wobei es dennoch möglich sein kann, dass sie es zeitlich nicht schafft, das an sie adressierte Paket zu empfangen, sodass - wie eingangs beschrieben - ein Bedarf vorherrscht, mit der Paketempfangsperson zu kommunizieren.

Bevorzugt sind ortsbezogene Informationen als Informationen zu verstehen, die Angaben über einen (aktuellen) Standort bzw. Aufenthaltsort liefern. Es versteht sich, dass durch die regelmäßige Übermittlung des Standorts des Lieferanten ebenfalls, der Standort des Pakets ersichtlich wird. Dabei ist es bevorzugt vorgesehen, auf GPS-Daten zurückzugreifen. Ortsbezogene Informationen können insbesondere auch bei der Abgabe des Pakets an einen Paketempfänger einer Rolle spielen. So wird durch die Übermittlung des Standortes beispielsweise ersichtlich, an welcher Adresse das Paket abgegeben wurde. Die ortsbezogenen Informationen können weiterhin auch Informationen über den Paketempfänger, wie den Nachnamen, umfassen.

Weiterhin bevorzugt ist, dass Informationen über die Lieferzeit, Informationen über den Lieferort, Informationen über den Paketstatus, Informationen über eventuelle Verspätungen und Änderungen bei der Lieferung durch den Lieferanten an die Servereinrichtung übermittelt wird.

Die ortsbezogenen Informationen, sowie sämtliche weitere vorgenannten Informationen, werden bevorzugt in Verbindung mit einer Identifikationsnummer an die Servereinrichtung übermittelt. Die Identifikationsnummer ist dabei bevorzugt - wie obig beschrieben - einem Sendungsvorgang bzw. einem Paket zugeordnet. Die Übermittlung kann sich der Art ausgestalten, dass die ortsbezogenen Informationen, sowie sämtliche weitere vorgenannten Informationen, mit der Identifikationsnummer in einem Datensatz an die Servereinrichtung übermittelt wird. Die Servereinrichtung kann nunmehr bevorzugt unter Berücksichtigung der Identifikationsnummer die ortsbezogenen Informationen, sowie sämtliche weitere vorgenannten Informationen, einem korrekten Absendevorgang (oder Sendungsvorgang oder Auftrag), welcher ebenfalls durch die Identifikationsnummer definiert ist, zuordnen. Dabei werden insbesondere die ortsbezogenen Informationen, sowie sämtliche weitere vorgenannten Informationen, aus dem Datensatz extrahiert und in einer Datenbank abgelegt.

Später werden bevorzugt auch die ausgetauschten Nachrichten zwischen der Paketempfangsperson und der Zielperson ebenfalls diesem Vorgang über die Identifikationsnummer zugewiesen.

In einer weiteren bevorzugten Ausführungsform ist das Verfahren dadurch gekennzeichnet, dass das Identifikationsmittel einen RFID-Tag, einen NFC-Tag einen QR-Code und/oder einen Barcode umfasst. Jede Form der vorgeschlagenen Identifikationsmittel hat eigene Vorteile. Die Barcode-Technologie zum Beispiel hat sich seit Jahrzehnten bewährt. Barcodes sind einfach zu erstellen (am PC oder mit Etikettensoftware), kostengünstig in der Produktion und flexibel einsetzbar - von kleinen Paketen bis hin zu ganzen Regalreihen. Die QR-Code-Technologie ist inzwischen ebenfalls etabliert. Auch QR-Codes werden in der Regel auf Etiketten produziert, die kostengünstig sind. Außerdem können mehr Informationen als bei normalen Barcodes eingefügt werden. Darüber hinaus ist die Erstellung eines QR-Codes besonders einfach, zum Beispiel auf einem PC oder einer mobilen Vorrichtung mithilfe eines QR-Codefonts in Word, einer Etikettensoftware oder eines Web-Dienstes. Der QR-Code kann dann flexibel und vor allem auf beliebig großen Flächen eingesetzt werden. RFID-Tags hingegen haben den Vorteil, dass sie nahezu unsichtbar an dem Paket (auch Innerhalb) angebracht werden können, da kein Sichtkontakt erforderlich ist, um den RFID-Tag zu erkennen. Außerdem hat der RFID-Tag eine fast hundertprozentige Ersterkennungsrate, ermöglicht einen schnellen Datenaustausch und große Entfernungen zwischen Transponder und Lesegerät sind möglich. Darüber hinaus ist ein RFID-Tag unempfindlich gegen Schmutz, kleinere Beschädigungen und viele andere Umwelteinflüsse. Ebenso ist eine präzisere Datenerfassung als bei Barcodes oder QR-Codes möglich, und die Erfassung von RFID-Tags ist durchweg in Echtzeit durchführbar.

Weiterhin bevorzugt umfasst das Identifikationsmittel einen AR-Marker (Augmented Reality Marker). Marker im Sinne von Augmented Reality sind vorzugsweise visuelle Auslöser in der realen Umgebung, welche das Anzeigen oder Einfügen von AR (Augmented Reality) Inhalten starten. Dies bedeutet beispielsweise, dass wenn eine Kamera einer entsprechenden mobilen Vorrichtung, während einer AR Anwendung einen vordefinierten Marker entdeckt, in Echtzeit AR Inhalte einfügt. Insoweit kann beispielsweise ein QR-Code als ein solcher Marker angesehen werden. Beim Erfassen des QR-Codes durch eine erste mobile Vorrichtung werden digitale Inhalte über eine Augmented Reality Anwendung freigeschaltet. So kann beispielsweise das Paket virtuell rot eingefärbt werden, wenn die Umgebungstemperatur, des Pakets zu hoch ist. Die Paketempfangsperson kann daraufhin reagieren und das Paket in einem Kühlschrank oder im Keller lagern, damit der Inhalt des Pakets keinen Schaden annimmt. Aber auch weitere relevante Informationen über das Paket könnten über AR-Marker und entsprechende Anwendungen (virtuell) visualisiert werden.

Die relevanten Paketinformationen, wie eine optimale Lagertemperatur, können im Identifikationsmittel gespeichert sein, sodass die erste mobile Vorrichtung diese ,beim Erfassen des Identifikationsmittels auslesen kann. Alternativ können die relevanten Paketinformationen auf der Servereinrichtung gespeichert sein. In einem solchen Fall empfängt die erste mobile Vorrichtung diese Paketinformationen automatisiert von der Servereinrichtung als Reaktion auf den Kommunikationsdatensatz..

Weiterhin können im Identifikationsmittel auch Sensoren umfasst sein, welche beispielsweise die Temperatur messen und zum Beispiel mit den relevanten Paketinformationen, wie die optimale Lagertemperatur, abgleichen. Dies ist besonders vorteilhaft, da der Empfänger des Pakets keine Informationen über den Inhalt des Pakets kennt und insoweit dennoch das Paket hinsichtlich des Paketinhalts optimal lagern kann. Durch die AR-Technologie werden sämtliche Informationen besonders benutzerfreundlich visualisiert.

In einer weiteren bevorzugten Ausführungsform ist das Verfahren dadurch gekennzeichnet, dass die Kommunikation zwischen der Zielperson und der Paketempfangsperson erst freigeschaltet wird, wenn das Paket vom Lieferanten an die Paketempfangsperson übergeben worden ist Dadurch wird sichergestellt, dass keine unbefugte Person vorher schon eine Nachricht an die Servereinrichtung bzw. die Zielperson absetzen kann. Insoweit gibt der Lieferant die Freigabe dafür, dass die Person, die ein Paket erhält, auch eine Kommunikation im Sinne des vorgeschlagenen Verfahrens initiieren kann.

Die Freischaltung einer Kommunikation zwischen der Zielperson und der Paketempfangsperson kann beispielsweise wie folgt durchgeführt werden: Wenn das Paket an die Paketempfangsperson abgegeben wurde, übermittelt der Lieferant einen Datensatz an die Servereinrichtung, worauf basierend die Servereinrichtung weiß, dass sie die nächsten Datensätze mit der mit einer bestimmten Identifikationsnummer des Pakets in der Datenbank gespeichert wird. Erhält sie vorher einen Datensatz mit der Identifikationsnummer speichert die Servereinrichtung keine Datensätze.

In einer weiteren bevorzugten Ausführungsform ist das Verfahren dadurch gekennzeichnet, dass der Kommunikationsdatensatz nach dem Erfassen des Identifikationsmittels, durch die erste mobile Vorrichtung automatisiert erzeugt und anhand der Kommunikationsinformation automatisiert an die Servereinrichtung übermittelt wird, wobei der Kommunikationsdatensatz auf der ersten mobilen Vorrichtung vorgespeicherte Informationen oder standardisierte Informationen enthält. Dadurch muss die Paketempfangsperson besonders wenig Aufwand betreiben, um eine Kommunikation mit der Zielperson zu initiieren. Die standardisierten bzw. in der mobilen Vorrichtung vorgespeicherten Daten ermöglichen anhand des vorgeschlagenen Verfahrens eine Nachricht mit einem Sinngehalt an die Zielperson zu übermitteln, ohne dass eine weitere Eingabe getätigt werden muss, nachdem das Identifikationsmittel erfasst wurde.

In einer weiteren bevorzugten Ausführungsform ist das Verfahren dadurch gekennzeichnet, dass die erste mobile Vorrichtung eine digitale Kopie des Identifikationsmittels an die Servereinrichtung übermittelt, um die Kommunikation zwischen der Zielperson und der Paketempfangsperson zu autorisieren. Die digitale Kopie des Identifikationsmittels kann beispielsweise ein Foto, ein Scan oder ein anderweitiges Abbild des RFID-Tags, des QR-Codes, des NFC-Tags, des AR-Markers und/oder des Barcodes sein. Das Autorisieren der Kommunikation zwischen der Zielperson und der Paketempfangsperson kann durch die Servereinrichtung erfolgen, indem die digitale Kopie des Identifikationsmittels (durch Auslesen durch die Servereinrichtung) mit dem Kommunikationsdatensatz verglichen wird, wobei der Kommunikationsdatensatz bspw. die Identifikationsnummer umfasst. Wenn die digitale Kopie des identifikationsmittels mit der Kommunikationsdatensatz bzw. Kommunikationsinformation übereinstimmt, wird die Kommunikation autorisiert. Der Vorteil dieses Verfahrens ist, dass es ein sichereres und effizienteres Kommunikationssystem zwischen der Zielperson und der Paketempfangsperson bietet, denn die Kommunikation kann nur stattfinden, wenn die Paketempfangsperson auch wirklich das Paket hat und ein Abbild des Identifikationsmittels bzw. eine digitale Kopie erzeugen kann. Da die digitale Kopie des Identifikationsmittels mit der Kommunikationsdatensatz verglichen wird, können die Kommunikationsparteien sicherer sein, dass die Kommunikation nur zwischen den autorisierten Parteien stattfindet.

In einer weiteren bevorzugten Ausführungsform ist das Verfahren dadurch gekennzeichnet, dass das Identifikationsmittel einen oder mehrere Sensoren umfasst, um die Bedingungen des Pakets zu überwachen, beispielsweise Temperatur, Feuchtigkeit, Druck, Beschleunigung und/oder Schüttbewegung. Die aufgenommenen Daten können durch Erfassen des Identifikationsmittels mittels mobiler Vorrichtung ausgelesen werden. Dadurch kann die Lagerung des Pakets optimiert werden und auch der zustand des Pakets an die Zielperson übermittelt werden.

In einer weiteren bevorzugten Ausführungsform betrifft die Erfindung ein System zur Kommunikation zwischen einer Zielperson und einer Paketempfangsperson dadurch gekennzeichnet, dass das System ein Paket, eine der Paketempfangsperson zugeordnete erste mobile Vorrichtung, eine der Zielperson zugeordnete zweite mobile Vorrichtung und eine Servereinrichtung umfasst, wobei
- das Paket ein Identifikationsmittel umfasst und an die Zielperson adressiert ist, wobei das Paket von der Paketempfangsperson zur Verwahrung von einem Lieferanten annehmbar ist;
- die erste mobile Vorrichtung dazu eingerichtet ist,
   (i) das Identifikationsmittel über eine Erfassungseinrichtung zu erfassen, wobei das Identifikationsmittel eine Kommunikationsinformation umfasst;
   (ii) einen Kommunikationsdatensatz zu erzeugen und den Kommunikationsdatensatz an die Servereinrichtung zu übermitteln;
- die Servereinrichtung dazu eingerichtet ist, den Kommunikationsdatensatz zu speichern und an die zweite mobile Vorrichtung zu übermitteln;
- die zweite mobile Vorrichtung dazu eingerichtet ist, eine Abfrage an die Servereinrichtung zu stellen.

Ein derartiges System zur Lösung der oben genannten Aufgabe ist aus dem Stand der Technik weder bekannt noch einem durchschnittlichen Fachmann nahegelegt. Das erfindungsgemäße System ist vielmehr als eine Abkehr vom Stand der Technik anzusehen, in welchem insbesondere keine digitale Kommunikation zwischen der Paketempfangsperson und der Zielperson möglich ist, sondern lediglich auf eine "Online-Verfolgung" des Pakets abgestellt wird - was jedoch in vielen Fällen (wie eingangs beschrieben) nicht ausreichend ist, um ein Paket ohne Weiteres in einem größeren Gebäudekomplex auffinden zu können.

Das System bietet vor allem auch die Möglichkeit, dass der Endverbraucher mit herkömmlichen Endgeräten an dem System partizipieren kann, sodass keine neuen Anschaffungen getätigt werden müssen.

Ein Fachmann erkennt, dass die im Zusammenhang mit dem erfindungsgemäßen Verfahren erörterten Vorteile, technischen Effekte und bevorzugten Ausführungsformen analog für das erfindungsgemäße System zur Kommunikation zwischen einer Zielperson und einer Paketempfangsperson gelten. Ebenfalls sind alle Vorteile, technischen Effekte und bevorzugten Ausführungsformen, welche im Kontext des Systems beschrieben werden, auf das Verfahren übertragbar.

In einer weiteren bevorzugten Ausführungsform ist das System dadurch gekennzeichnet, dass das System eine dritte mobile Vorrichtung umfasst, wobei die dritte mobile Vorrichtung dazu eingerichtet ist, eine bidirektionale Datenverbindung mit der Servereinrichtung aufzunehmen, wobei die Servereinrichtung dazu eingerichtet ist, einen Vorgang mit einer Identifikationsnummer zu erstellen und diese einerseits an die zweite mobile Vorrichtung zu übermitteln und andererseits in der Kommunikationsinformation umfasst ist.

### FIGUREN

Im Folgenden soll die Erfindung anhand von Figuren näher erläutert werden, ohne auf diese beschränkt zu sein.

### Kurzbeschreibung der Figuren

- **Fig. 1**: Ablaufdiagramm einer bevorzugten Ausführungsform des erfindungsgemäßen Verfahrens, insbesondere eine Darstellung über die Erzeugung einer Identifikationsnummer sowie eines Identifikationsmittels beim Absendevorgang
- **Fig. 2**: Ablaufdiagramm einer bevorzugten Ausführungsform des erfindungsgemäßen Verfahrens, insbesondere eine Darstellung des Pakettransportvorgangs
- **Fig. 3**: Ablaufdiagramm einer bevorzugten Ausführungsform des erfindungsgemäßen Verfahrens, insbesondere eine Darstellung der Zustellung an eine Paketempfangsperson und Kommunikation zwischen der Paketempfangsperson und einer Zielperson

### Detaillierte Beschreibung der Figuren

**Fig. 1** illustriert ein Ablaufdiagramm einer bevorzugten Ausführungsform des erfindungsgemäßen Verfahrens, insbesondere eine Darstellung über die Erzeugung einer Identifikationsnummer 10 sowie eines Identifikationsmittels 6 beim Absendevorgang eines Pakets 1. Ein Paket 1 wird zum Beispiel an eine Zielperson 2 geschickt, wenn die Zielperson 2 eine Bestellung im Internet aufgegeben hat, oder wenn eine der Zielperson 2 bekannte Person der Zielperson 2 ein Geschenk oder Gegenstand schicken möchte (ohne darauf beschränkt zu sein).

Im Sinne der Erfindung wird für den Versand eines Pakets 1 vorzugsweise zunächst ein Auftrag von demjenigen erstellt, der das Paket 1 versenden möchte, also dem Absender 4. Dem Absender 4 ist bevorzugt ein Endgerät, Insbesondere eine dritte mobile Vorrichtung 11, zugeordnet. Anhand der dritten mobilen Vorrichtung 11 kann der Absender 4 dabei bevorzugt eine bidirektionale Verbindung mit einer Servereinrichtung 9 aufbauen. Diesbezüglich weist die dritte mobile Vorrichtung 11 entsprechende Applikationen auf oder aber die Verbindung wird über eine Webseite hergestellt.

Insoweit der Absender 4 einen Auftrag erstellen möchte, wobei der Absender 4 bevorzugt Adressdaten der Zielperson 2 angibt bzw. an die Servereinrichtung 9 übermittelt, generiert die Servereinrichtung 9 einen Vorgang mit einer Identifikationsnummer 10. Hierfür weist die Servereinrichtung 9 Algorithmen auf, die eine Erzeugung einer manipulationssicheren Identifikationsnummer 10 ermöglichen.

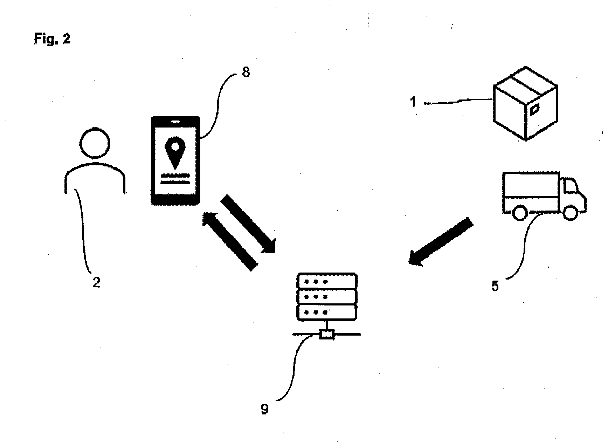

Die Servereinrichtung 9 übermittelt die erzeugte Identifikationsnummer 10 anschließend an die dritte mobile Vorrichtung 11, welche dem Absender 4 zugeordnet ist. Weiterhin kann die Servereinrichtung 9 die Identifikationsnummer 10 auch an eine zweite mobile Vorrichtung 8, die der Zielperson 2 zugeordnet ist, übermitteln. Dies kann z.B. dadurch geschehen, dass die Identifikationsnummer 10 an ein E-Mail-Postfach der Zielperson 2 übermittelt wird und die Zielperson 2 das E-Mail-Postfach über die zweite mobile Vorrichtung 8 abfragt. Es versteht sich, dass in diesem Fall der Absender 4 auch die E-Mail-Adresse der Zielperson 2 bei der Erstellung eines Auftrags bzw. Vorgangs an die Servereinrichtung 9 übermittelt bzw. angegeben hat. Anhand der Identifikationsnummer 10 kann die Zielperson 2 nunmehr den Bearbeitungsstatus des Pakets 1 sowie die ortsbezogenen Informationen des Pakets 1 oder eines Lieferanten 5 von der Servereinrichtung 9 beziehen (siehe auch Fig. 2).

Alternativ kann vorgesehen sein, dass statt der Servereinrichtung 9 der Absender 4 über die dritte mobile Vorrichtung 11 die Identifikationsnummer 10 an das E-Mall-Postfach der Zielperson 2 sendet, wobei die Zielperson 2 das E-Mail-Postfach durch die zweite mobile Vorrichtung 8 abfragen kann.

In einem weiteren Schritt erstellt der Absender 4 vorzugsweise ein Identifikationsmittel 6. Das Identifikationsmittel 6 kann vorzugsweise in Form eines QR-Codes oder eines RFID-Tags vorliegen. Die in dem QR-Code oder RFID-Tag enthaltenen Informationen weisen insbesondere eine Kommunikationsinformation auf. Die Kommunikationsinformation umfasst beispielsweise Informationen über einen Verbindungsaufbau zur Servereinrichtung 9. Darüber hinaus ist auch die Identifikationsnummer 10 in dem Identifikationsmittel 6 (QR-Code oder RFID-Tag) oder in der Kommunikationsinformation implementiert. Das Identifikationsmittel 6 wird ferner bevorzugt auf dem Paket 1 angebracht und an einen Lieferanten 5 übergeben, der das Paket 1 nach Möglichkeit an die Adresse der Zielperson 2 liefern soll.

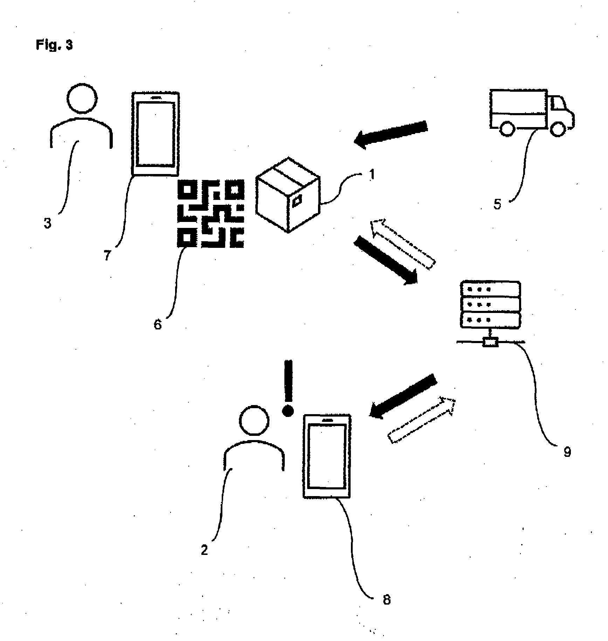

Fig. 2 zeigt ein Ablaufdiagramm einer bevorzugten Ausführungsform des erfindungsgemäßen Verfahrens, insbesondere eine Darstellung des Pakettransportvorgangs. Während sich ein Paket 1 in der Obhut eines Lieferanten 5 befindet und der Lieferant 5 auf dem Weg ist, das Paket 1 an die Zielperson 2 auszuliefern, sendet der Lieferant 5 vorzugsweise zyklisch ortsbezogene Informationen an die Servereinrichtung 9. Unter ortsbezogene Informationen sind insbesondere der Standort des Lieferanten 5 zu verstehen. Die Zielperson 2 kann bevorzugt über die zweite mobile Vorrichtung 8 eine Verbindung zur Servereinrichtung 9 herstellen und über die ihr zuvor übermittelte Identifikationsnummer 10 (s. Fig. 1) den Status bzw. den Standort des Lieferanten 5 bzw. des Pakets 1 abfragen. Dies kann jederzeit erfolgen, auch wenn sich das Paket 1 bei einer Paketempfangsperson 3 befindet (s. Fig. 3). Vorzugsweise übermittelt der Lieferant 6 nach der Übergabe des Pakets 1 an eine Paketempfangsperson 3 auch ortsbezogene Daten des Übergabeorts bzw. der Paketempfangsperson 3.

**Fig. 3** zeigt ein Ablaufdiagramm einer bevorzugten Ausführungsform des erfindungsgemäßen Verfahrens, insbesondere eine Darstellung der Zustellung an eine Paketempfangsperson 3 und Kommunikation zwischen der Paketempfangsperson 3 und einer Zielperson 2. In einem Fall, in dem die Zielperson 2 nicht an ihrer Zieladresse anzutreffen ist und eine Zustellung des Pakets 1 an die Zielperson 2 nicht möglich ist, versucht ein Lieferant 5 üblicherweise das Paket 1 bei Nachbarn abzugeben. Vorzugsweise ist ein Nachbar eine Paketempfangsperson 3. Die Paketempfangsperson 3 nimmt bevorzugt nachbarschaftsdienlich das Paket 1 zur Verwahrung vom Lieferanten 5 entgegen. Das Paket 1 weist dabei bevorzugt ein Identifikationsmittel 6 auf. Dieses Identifikationsmittel 6 kann als QR-Code, Barcode, oder RFID-Tag ausgestaltet sein.

In einem bevorzugten ersten Schritt wird das Identifikationsmittel 6 über eine Erfassungseinrichtung einer der Paketempfangsperson 3 zugeordneten ersten mobilen Vorrichtung 7 erfasst. Das Identifikationsmittel 6 umfasst bevorzugt eine Kommunikationsinformation. Durch Erfassen des Identifikationsmittels 6 kann die Kommunikationsinformation extrahiert werden. Die Kommunikationsinformation umfasst beispielsweise die Identifikationsnummer 10 sowie. Informationen über einen Verbindungsaufbau mit einer Servereinrichtung 9. Anschließend wird durch die erste mobile Vorrichtung 7 ein Kommunikationsdatensatz erzeugt und anhand der Kommunikationsinformation an die Servereinrichtung 9 gesendet. In diesem Zusammenhang wird der Kommunikationsdatensatz bevorzugt als sogenannter Payload (Nutzlast) mittels "http"/"https" übermittelt. Die Servereinrichtung 9 speichert bevorzugt den Kommunikationsdatensatz. Insoweit die Servereinrichtung 9 den Kommunikationsdatensatz erhält, kann diese die Identifikationsnummer 10 innerhalb des Kommunikationsdatensatzes ermitteln und den Kommunikationsdatensatz somit bevorzugt in einer Datenbank dieser Identifikationsnummer 10 bzw. einem Auftrag oder einem Sendungsvorgang zuordnen und speichern.

Ferner wird die Servereinrichtung 9 bevorzugt über eine der Zielperson 2 zugeordneten zweiten mobile Vorrichtung 8 abgefragt. Die Abfrage gestaltet sich derart, dass überprüft wird, ob ein an die zweite mobile Vorrichtung 8 adressierter Kommunikationsdatensatz auf der Servereinrichtung 9 gespeichert bzw. in der Datenbank abgelegt wurde. Bei der Abfrage der zweiten mobilen Vorrichtung 8, übermittelt die zweite mobile Vorrichtung 8 bevorzugt der Servereinrichtung 9 die ihr vorher über IP-basierter Kommunikation (bspw. E-Mail) zugeschickte Identifikationsnummer 10. Die Servereinrichtung 9 durchsucht bevorzugt anschließend die Datenbank, ob unter dieser Identifikationsnummer 10 ein Kommunikationsdatensatz in der Datenbank gespeichert ist.

Die Abfrage der Servereinrichtung 9 durch die zweite mobile Vorrichtung 8 erfolgt bevorzugt automatisiert, bevorzugt in einem Zyklus von 1 min - 60 min. So kann beispielsweise die Abfrage im Hintergrund anderer auf der mobilen Vorrichtung 8 ausgeführter Anwendungen erfolgen und sobald ein Kommunikationsdatensatz für die Zielperson 2 hinterlegt sein sollte, wird der Zielperson 2 eine Meldung auf ihrer mobilen Vorrichtung 8 bereitgestellt, welche verdeutlicht, dass eine Nachricht angekommen ist. Nachdem diese Meldung von der Zielperson 8 geöffnet wurde, kann sie bevorzugt die im Kommunikationsdatensatz umfassten Informationen lesen. Dabei wird der Kommunikationsdatensatz an die zweite mobile Vorrichtung 8 übermittelt. Vorzugsweise wird die im Kommunikationsdatensatz umfassten Informationswerte aus der Datei extrahiert und auf der mobilen Vorrichtung 8 strukturiert visualisiert, sodass die Zielperson 2 diese unmittelbar lesen kann. Die Abfrage der Servereinrichtung 9 durch die zweite mobile Vorrichtung 8 kann bevorzugt auch manuell erfolgen. Vorzugsweise weist die mobile Vorrichtung 8 ein installiertes Computerprogrammprodukt (Appl Applikation) auf, welches durch Bedienung der Zielperson 2 eine Abfrage über IP-basierter Kommunikation auslöst.

Nach Erhalt des Kommunikationsdatensatzes wird bevorzugt ein Antwortdatensatz durch die Zielperson 2 auf der zweiten mobilen Vorrichtung 8 generiert und an die Servereinrichtung 9 übermittelt (bevorzugt in der gleichen Weise, wie der Kommunikationsdatensatz durch die erste mobile Vorrichtung 7 an die Servereinrichtung 9 ermittelt wurde). Die Servereinrichtung 9 speichert den Antwortdatensatz und kann ebenfalls durch die erste mobile Vorrichtung 7 (manuell oder automatisiert) abgerufen werden.

### BEZUGSZEICHENLISTE

- 1: Paket
- 2: Zielperson
- 3: Paketempfangsperson
- 4: Absender
- 5: Lieferant
- 6: Identifikationsmittel
- 7: Erste mobile Vorrichtung
- 8: Zweite mobile Vorrichtung
- 9: Servereinrichtung
- 10: Identifikationsnummer
- 11: Dritte mobile Vorrichtung

## Patentansprüche

1. Verfahren zur Kommunikation zwischen einer Zielperson (2) und einer Paketempfangsperson (3), wobei ein Paket (1) an die Zielperson (2) adressiert und von der Paketempfangsperson (3) zur Verwahrung von einem Lieferanten (5) angenommen wird, wobei das Paket (1) ein Identifikationsmittel (6) umfasst; **dadurch gekennzeichnet, dass**
das Verfahren die nachfolgenden Schritte umfasst:
a. Erfassen des Identifikationsmittels (6) über eine Erfassungseinrichtung einer der Paketempfangsperson (3) zugeordneten ersten mobilen Vorrichtung (7), wobei das Identifikationsmittel (6) eine Kommunikationsinformation umfasst, wobei die Kommunikationsinformation eine Information über einen Verbindungsaufbau zu einer Servereinrichtung (9) umfasst, sodass die erste mobile Vorrichtung (7) die notwendigen Informationen zur Kommunikation mit der Servereinrichtung (9) kennt;
b. Erzeugen eines Kommunikationsdatensatzes durch die erste mobile Vorrichtung (7);
c. Übermittelung des Kommunikationsdatensatzes anhand der Kommunikationsinformation an die Servereinrichtung (9);
d. Speichern des Kommunikationsdatensatzes durch die Servereinrichtung (9);
e. Abfragen der Servereinrichtung (9) über eine zweite der Zielperson (2) zugeordnete mobile Vorrichtung (8);
f. Übermittlung des Kommunikationsdatensatzes an die zweite mobile Vorrichtung (8).

2. Verfahren gemäß Anspruch 1
**dadurch gekennzeichnet, dass**
die zweite mobile Vorrichtung (8) nach dem Erhalt des Kommunikationsdatensatzes einen Antwortdatensatz generiert und diesen an die Servereinrichtung (9) übermittelt, wobei die Servereinrichtung (9) den Antwortdatensatz speichert und dieser durch die erste mobile Vorrichtung (7) abgerufen werden kann oder die Servereinrichtung (9) den Antwortdatensatz ohne eine Speicherung an die erste mobile Vorrichtung (7) weiterleitet

3. Verfahren nach einem oder beiden der vorhergehenden Ansprüche
**dadurch gekennzeichnet, dass**
die Servereinrichtung (9) den Kommunikationsdatensatz und/oder den Antwortdatensatz in einer Datenbank speichert und den Kommunikationsdatensatz und/oder den Antwortdatensatz der ersten und/oder zweiten mobilen Vorrichtung (7, 8) zuordnet.

4. Verfahren nach einem oder mehreren der vorhergehenden Ansprüche
**dadurch gekennzeichnet, dass**
die Abfrage der Servereinrichtung (9) durch die zweite mobile Vorrichtung (8) manuell, bevorzugt durch die Zielperson (2), ausgelöst wird.

5. Verfahren nach einem oder mehreren der vorhergehenden Ansprüche 1 - 3
**dadurch gekennzeichnet, dass**
die Abfrage der Servereinrichtung (9) durch die zweite mobile Vorrichtung (8) automatisiert, bevorzugt in einem Zyklus von 1 min - 60 min, erfolgt.

6. Verfahren nach einem oder mehreren der vorhergehenden Ansprüche
**dadurch gekennzeichnet, dass**
beim Absenden des Pakets (1) durch einen Absender (4) eine Identifikationsnummer (10) generiert wird, indem ein Endgerät, bevorzugt eine dritte mobile Vorrichtung (11), eine bidirektionale Verbindung mit der Servereinrichtung (9) aufnimmt und die Servereinrichtung (9) einen Vorgang mit einer Identifikationsnummer (10) erstellt, welche einerseits der zweiten mobilen Vorrichtung (8) übermittelt wird und andererseits in der Kommunikationsinformation umfasst ist.

7. Verfahren nach einem oder mehreren der vorhergehenden Ansprüche
**dadurch gekennzeichnet, dass**
der Lieferant (5), bevorzugt zyklisch, ortsbezogene Informationen, Informationen über die Lieferzeit, Informationen über den Lieferort, Informationen über den Paketstatus, Informationen über eventuelle Verspätungen und Änderungen bei der Lieferung an die Servereinrichtung (9) übermittelt, welche von der zweiten mobilen Vorrichtung (8) abgerufen werden können.

8. Verfahren nach einem oder mehreren der vorhergehenden Ansprüche
**dadurch gekennzeichnet, dass**
das Identifikationsmittel (6) einen RFID-Tag, einen QR-Code, ein NFC-Tag, einen Augmented Reality-Marker und/oder einen Barcode umfasst.

9. Verfahren nach einem oder mehreren der vorhergehenden Ansprüche
**dadurch gekennzeichnet, dass**
die Kommunikation zwischen der Paketempfangsperson (3) und Zielperson (2) erst freigeschaltet wird, wenn das Paket (1) vom Lieferanten (5) bereits an die Paketempfangsperson (3) übergeben worden ist.

10. Verfahren nach einem oder mehreren der vorhergehenden Ansprüche
**dadurch gekennzeichnet, dass**
der Kommunikationsdatensatz nach dem Erfassen des Identifikationsmittels, durch die erste mobile Vorrichtung (7) automatisiert erzeugt und anhand der Kommunikationsinformation automatisiert an die Servereinrichtung (9) übermittelt wird, wobei der Kommunikationsdatensatz auf der ersten mobilen Vorrichtung (7) vorgespeicherte Informationen und/oder standardisierte Informationen umfasst.

11. Verfahren nach einem oder mehreren der vorhergehenden Ansprüche
**dadurch gekennzeichnet, dass**
die Servereinrichtung (9) eine Benachrichtigung für die erste mobile Vorrichtung (7) erzeugt, wenn die zweite mobile Vorrichtung (8) den Kommunikationsdatensatz abfragt.

12. Verfahren nach einem oder mehreren der vorhergehenden Ansprüche
**dadurch gekennzeichnet, dass**
das Identifikationsmittel (6) einen oder mehrere Sensoren umfasst, um die Bedingungen des Pakets (1) zu überwachen, beispielsweise Temperatur, Feuchtigkeit, Druck, Beschleunigung und/oder Schüttbewegung.

13. Verfahren nach einem oder mehreren der vorhergehenden Ansprüche
**dadurch gekennzeichnet, dass**
die erste mobile Vorrichtung (7) eine digitale Kopie des Identifikationsmittels (6) an die Servereinrichtung (9) übermittelt, um die Kommunikation zwischen der Zielperson (2) und der Paketempfangsperson (3) zu autorisieren.

14. System zur Kommunikation zwischen einer Zielperson (2) und einer Paketempfangsperson (3)
**dadurch gekennzeichnet, dass**
das System ein Paket (1), eine der Paketempfangsperson (3) zugeordnete erste mobile Vorrichtung (7), eine der Zielperson (2) zugeordnete zweite mobile Vorrichtung (8) und eine Servereinrichtung (9) umfasst, wobei
- das Paket (1) ein Identifikationsmittel (6) umfasst und an die Zielperson (2) adressiert ist, wobei das Paket (1) von der Paketempfangsperson zur Verwahrung von einem Lieferanten (5) annehmbar ist;
- die erste mobile Vorrichtung (7) dazu eingerichtet ist,
(i) das Identifikationsmittel (6) über eine Erfassungseinrichtung zu erfassen, wobei das Identifikationsmittel (6) eine Kommunikationsinformation umfasst, wobei die Kommunikationsinformation eine Information über einen Verbindungsaufbau zur Servereinrichtung (9) umfasst, sodass die erste mobile Vorrichtung (7) die notwendigen Informationen zur Kommunikation mit der Servereinrichtung (9) kennt;
(ii) einen Kommunikationsdatensatz zu erzeugen und den Kommunikationsdatensatz an die Servereinrichtung (9) zu übermitteln;
- die Servereinrichtung (9) dazu eingerichtet ist, den Kommunikationsdatensatz zu speichern und an die zweite mobile Vorrichtung (8) zu übermitteln;
- die zweite mobile Vorrichtung (8) dazu eingerichtet ist, eine Abfrage an die Servereinrichtung (9) zu stellen.

15. System nach Anspruch 14
**dadurch gekennzeichnet, dass**
das System eine dritte mobile Vorrichtung (11) umfasst, wobei die dritte mobile Vorrichtung (11) dazu eingerichtet ist, eine bidirektionale Datenverbindung mit der Servereinrichtung (9) aufzunehmen, wobei die Servereinrichtung (9) dazu eingerichtet ist, einen Vorgang mit einer Identifikationsnummer (10) zu erstellen und diese einerseits an die zweite mobile Vorrichtung (8) zu übermitteln und andererseits in der Kommunikationsinformation umfasst ist.

## Claims

1. A method for communication between a target person (2) and a packet reception person (3), wherein a package (1) is addressed to the target person (2) and accepted by the packet reception person (3) for safekeeping from a delivery agent (5), the package (1) comprising an identification means (6);
**characterized in that**
the method comprises the following steps:
a. Capturing the identification means (6) using a capture device of a first mobile device (7) associated with the packet reception person (3), wherein the identification means (6) includes communication information, and the communication information comprises information about establishing a connection to a server device (9), such that the first mobile device (7) knows the necessary information for communication with the server device (9);
b. Generating a communication dataset by the first mobile device (7);
c. Transmitting the communication dataset to the server device (9) based on the communication information;
d. Storing the communication dataset in the server device (9);
e. Querying the server device (9) using a second mobile device (8) associated with the target person (2);
f. Transmitting the communication dataset to the second mobile device (8).

2. The method according to claim 1,
**characterized in that**
the second mobile device (8), upon receiving the communication dataset, generates a response dataset and transmits it to the server device (9), wherein the server device (9) stores the response dataset, which can be retrieved by the first mobile device (7), or forwards the response dataset to the first mobile device (7) without storage.

3. The method according to one or both of the preceding claims,
**characterized in that**
the server device (9) stores the communication dataset and/or the response dataset in a database and associates the communication dataset and/or the response dataset with the first and/or second mobile device (7, 8).

4. The method according to one or more of the preceding claims, **characterized in that**
the query to the server device (9) by the second mobile device (8) is manually triggered, preferably by the target person (2).

5. The method according to one or more of claims 1-3,
**characterized in that**
the query to the server device (9) by the second mobile device (8) is automated, preferably in a cycle of 1 to 60 minutes.

6. The method according to one or more of the preceding claims, **characterized in that**
when the package (1) is dispatched by a sender (4), an identification number (10) is generated by establishing a bidirectional connection between a terminal device, preferably a third mobile device (11), and the server device (9), wherein the server device (9) creates a process with an identification number (10), which is transmitted to the second mobile device (8) and included in the communication information.

7. The method according to one or more of the preceding claims, **characterized in that**
the delivery agent (5), preferably cyclically, transmits location-based information, delivery time information, delivery location information, package status information, and information about possible delays and changes in the delivery to the server device (9), which can be retrieved by the second mobile device (8).

8. The method according to one or more of the preceding claims, **characterized in that**
the identification means (6) includes an RFID tag, a QR code, an NFC tag, an augmented reality marker, and/or a barcode.

9. The method according to one or more of the preceding claims, **characterized in that**
communication between the packet reception person (3) and the target person (2) is only enabled once the package (1) has been handed over to the packet reception person (3) by the delivery agent (5).

10. The method according to one or more of the preceding claims, **characterized in that**
the communication dataset is automatically generated by the first mobile device (7) after capturing the identification means and is automatically transmitted to the server device (9) based on the communication information, wherein the communication dataset includes pre-stored information and/or standardized information on the first mobile device (7).

11. The method according to one or more of the preceding claims,
**characterized in that**
the server device (9) generates a notification for the first mobile device (7) when the second mobile device (8) queries the communication dataset.

12. The method according to one or more of the preceding claims,
**characterized in that**
the identification means (6) includes one or more sensors to monitor the conditions of the package (1), such as temperature, humidity, pressure, acceleration, and/or tilting movements.

13. The method according to one or more of the preceding claims,
**characterized in that**
the first mobile device (7) transmits a digital copy of the identification means (6) to the server device (9) to authorize communication between the target person (2) and the packet reception person (3).

14. A system for communication between a target person (2) and a packet reception person (3),
**characterized in that**
the system comprises a package (1), a first mobile device (7) associated with the packet reception person (3), a second mobile device (8) associated with the target person (2), and a server device (9), wherein
- the package (1) includes identification means (6) and is addressed to the target person (2), with the package (1) being receivable by the packet reception person (3) for safekeeping from a delivery agent (5);
- the first mobile device (7) is configured to:
(i) capture the identification means (6) using a capture device, wherein the identification means (6) includes communication information, the communication information comprising information about establishing a connection to the server device (9), so that the first mobile device (7) knows the necessary information for communication with the server device (9);
(ii) generate a communication dataset and transmit the communication dataset to the server device (9);
- the server device (9) is configured to store the communication dataset and transmit it to the second mobile device (8);
- the second mobile device (8) is configured to query the server device (9).

15. The system according to claim 14,
**characterized in that**
the system includes a third mobile device (11), wherein the third mobile device (11) is configured to establish a bidirectional data connection with the server device (9), and wherein the server device (9) is configured to create a process with an identification number (10) and transmit it to the second mobile device (8) and include it in the communication information.

## Revendications

1. Procédé de communication entre un sujet cible (2) et un sujet recevant des paquets (3), dans lequel un paquet (1) est adressé au sujet cible (2) et est réceptionné par le sujet recevant des paquets (3) pour être gardé par un livreur (5), le paquet (1) comprenant un moyen d'identification (6),
**caractérisé en ce que**
le procédé comprend les étapes suivantes :
a. La capture du moyen d'identification (6) à l'aide d'un dispositif de capture associé à un premier appareil mobile (7) appartenant au sujet recevant des paquets (3), le moyen d'identification (6) comprenant une information de communication, ladite information de communication contenant des données relatives à l'établissement d'une connexion avec un serveur (9), de sorte que le premier appareil mobile (7) dispose des informations nécessaires pour communiquer avec le serveur (9) ;
b. La génération d'un enregistrement de communication par le premier appareil mobile (7) ;
c. La transmission de l'enregistrement de communication au serveur (9) sur la base des informations de communication ;
d. Le stockage de l'enregistrement de communication par le serveur (9) ;
e. La requête adressée au serveur (9) à l'aide d'un second appareil mobile (8) associé au sujet cible (2) ;
f. La transmission de l'enregistrement de communication au second appareil mobile (8).

2. Procédé selon la revendication 1,
**caractérisé en ce que**
le second appareil mobile (8), après réception de l'enregistrement de communication, génère un enregistrement de réponse et le transmet au serveur (9), le serveur (9) stockant l'enregistrement de réponse, lequel peut être récupéré par le premier appareil mobile (7), ou transmettant l'enregistrement de réponse au premier appareil mobile (7) sans le stocker.

3. Procédé selon l'une ou les deux revendications précédentes,
**caractérisé en ce que**
le serveur (9) stocke l'enregistrement de communication et/ou l'enregistrement de réponse dans une base de données et les associe au premier et/ou au second appareil mobile (7, 8).

4. Procédé selon l'une ou plusieurs des revendications précédentes, **caractérisé en ce que**
la requête adressée au serveur (9) par le second appareil mobile (8) est déclenchée manuellement, de préférence par le sujet cible (2).

5. Procédé selon l'une ou plusieurs des revendications 1 à 3,
**caractérisé en ce que**
la requête adressée au serveur (9) par le second appareil mobile (8) est automatisée, de préférence dans un cycle de 1 à 60 minutes.

6. Procédé selon l'une ou plusieurs des revendications précédentes, **caractérisé en ce que**
lors de l'expédition du paquet (1) par un expéditeur (4), un numéro d'identification (10) est généré via un terminal, de préférence un troisième appareil mobile (11), qui établit une connexion bidirectionnelle avec le serveur (9). Le serveur (9) crée un processus avec un numéro d'identification (10), lequel est transmis au second appareil mobile (8) et inclus dans les informations de communication.

7. Procédé selon l'une ou plusieurs des revendications précédentes, **caractérisé en ce que**
le livreur (5), de préférence de manière cyclique, transmet au serveur (9) des informations géolocalisées, des informations sur le délai de livraison, le lieu de livraison, l'état du colis, des retards éventuels et des modifications de la livraison, lesquelles peuvent être récupérées par le second appareil mobile (8).

8. Procédé selon l'une ou plusieurs des revendications précédentes, **caractérisé en ce que**
le moyen d'identification (6) comprend une étiquette RFID, un code QR, une étiquette NFC, un marqueur de réalité augmentée et/ou un code-barres.

9. Procédé selon l'une ou plusieurs des revendications précédentes, **caractérisé en ce que**
la communication entre le sujet recevant des paquets (3) et le sujet cible (2) n'est activée qu'après que le paquet (1) a été remis par le livreur (5) au sujet recevant des paquets (3).

10. Procédé selon l'une ou plusieurs des revendications précédentes, **caractérisé en ce que**
l'enregistrement de communication est généré automatiquement par le premier appareil mobile (7) après la capture du moyen d'identification, et transmis automatiquement au serveur (9) sur la base des informations de communication, l'enregistrement de communication comprenant des informations préenregistrées et/ou des informations standardisées sur le premier appareil mobile (7).

11. Procédé selon l'une ou plusieurs des revendications précédentes, **caractérisé en ce que**
le serveur (9) génère une notification pour le premier appareil mobile (7) lorsque le second appareil mobile (8) consulte l'enregistrement de communication.

12. Procédé selon l'une ou plusieurs des revendications précédentes,
**caractérisé en ce que**
le moyen d'identification (6) comprend un ou plusieurs capteurs pour surveiller les conditions du paquet (1), telles que la température, l'humidité, la pression, l'accélération et/ou les mouvements de secousse.

13. Procédé selon l'une ou plusieurs des revendications précédentes,
**caractérisé en ce que**
le premier appareil mobile (7) transmet une copie numérique du moyen d'identification (6) au serveur (9) pour autoriser la communication entre le sujet cible (2) et le sujet recevant des paquets (3).

14. Système de communication entre un sujet cible (2) et un sujet recevant des paquets (3),
**caractérisé en ce que**
le système comprend un paquet (1), un premier appareil mobile (7) associé au sujet recevant des paquets (3), un second appareil mobile (8) associé au sujet cible (2), et un serveur (9),
- le paquet (1) comprenant un moyen d'identification (6) et étant adressé au sujet cible (2), le paquet (1) pouvant être réceptionné pour garde par le sujet recevant des paquets (3) auprès d'un livreur (5) ;
- le premier appareil mobile (7) étant configuré pour :
(i) capturer le moyen d'identification (6) à l'aide d'un dispositif de capture, le moyen d'identification (6) comprenant des informations de communication relatives à l'établissement d'une connexion avec le serveur (9), afin que le premier appareil mobile (7) dispose des informations nécessaires pour communiquer avec le serveur (9) ;
(ii) générer un enregistrement de communication et transmettre cet enregistrement au serveur (9) ;
- le serveur (9) étant configuré pour stocker l'enregistrement de communication et le transmettre au second appareil mobile (8) ;
- le second appareil mobile (8) étant configuré pour envoyer une requête au serveur (9).

15. Système selon la revendication 14,
**caractérisé en ce que**
le système comprend un troisième appareil mobile (11), lequel est configuré pour établir une connexion bidirectionnelle avec le serveur (9). Le serveur (9) est configuré pour créer un processus avec un numéro d'identification (10), lequel est transmis au second appareil mobile (8) et inclus dans les informations de communication.
